# EUROPÄISCHE PATENTANMELDUNG

(11) **EP 2 786 835 A1**
(43) Veröffentlichungstag der Anmeldung: **08.10.2014**
(21) Anmeldenummer: 13161914.0
(22) Anmeldetag: 02.04.2013
(51) Int. Cl.: B23K 26/28, B21C 37/12, B23K 26/38, B23K 31/02, F16L 11/16, F16L 11/24, B23K 20/10, H01L 23/00, H01R 43/02

(54) **Vorrichtung und Verfahren zum Verschweissen mittels Ultraschall mit einer beweglichen Begrenzungsfläche**

(71) Anmelder: Telsonic Holding AG, 9552 Bronschhofen (CH)
(72) Erfinder: Büttiker, Albert, 9533 Kirchberg (CH)
(74) Vertreter: Hepp Wenger Ryffel AG

(57) **Zusammenfassung**

Die Erfindung betrifft eine Vorrichtung zum Verschweissen von Schweissgut in einem Verdichtungsraum (2) mittels Ultraschall, wobei der Verdichtungsraum (2) in einer Schweissposition von Abschnitten von aneinander angrenzenden Begrenzungsflächen (4, 6, 8, 17) umschlossen ist. Die Begrenzungsflächen umfassen eine Schweissfläche (4), welche an einer Ultraschallschwingungen übertragenden Sonotrode (3) ausgebildet ist, eine Ambossfläche (17), welche an einem Amboss (16) ausgebildet ist und in der Schweissposition als Gegenfläche gegenüber der Schweissfläche (4) angeordnet ist, eine Seitenfläche (8), welche an einem seitlichen Begrenzungselement (7) ausgebildet ist, eine Schieberfläche (6), welche an einem Schieberelement (5) ausgebildet ist und gegenüber der Seitenfläche (8) angeordnet ist. Dabei ist wenigstens eine der Begrenzungsflächen (6) derart beweglich ausgebildet, dass eine Ausrichtung relativ zur gegenüberliegenden Begrenzungsfläche (8). Die Erfindung betrifft auch ein zugehöriges Verfahren zum Verschweissen von Schweissgut mittels Ultraschall.

## Beschreibung

Die Erfindung betrifft eine Vorrichtung und ein Verfahren zum Verschweissen von Schweissgut mittels Ultraschall in einem Verdichtungsraum, insbesondere zum Verschweissen von länglichem Schweissgut, vorzugsweise von elektrischen Leitern, gemäss den Oberbegriffen der unabhängigen Ansprüche.

Derartige Vorrichtungen sind z.B. als mobile Handgeräte sowie als stationäre Geräte bekannt und kommen bevorzugt zum Verschweissen von länglichem Schweissgut wie z.B. elektrischen Leitern wie Litzen zum Einsatz. Der Verdichtungsraum ist in der Regel in lateraler Richtung, d.h. in einer Richtung quer zu einem lichten Durchtrittsbereich für das Schweissgut, zumindest einseitig von einer Schweissfläche einer Sonotrode begrenzt. Typischerweise wird die Sonotrode mittels eines Ultraschall-Konverters z.B. zu longitudinalen oder torsionalen Ultraschallschwingungen angeregt. Über die im Allgemeinen profilierte Schweissfläche werden die Schwingungen der Sonotrode auf das Schweissgut übertragen. Der Schweissfläche der Sonotrode gegenüberliegend ist in der Regel eine Gegenelektrode oder ein Amboss angeordnet. Zudem kann der Verdichtungsraum durch seitliche Begrenzungselemente und/oder Schieberelemente zusätzlich begrenzt sein, sodass der Verdichtungsraum zumindest beim Verschweissen weitgehend vollständig in lateraler Richtung umschlossen ist. Der Verdichtungsraum kann beispielsweise derart verstellbar ausgebildet sein, dass das Schweissgut durch Verringerung eines Querschnitts des lichten Durchtritts während des Schweissens verdichtet werden kann. Dies kann z.B. durch relative Verschiebung des Schieber- und/oder Begrenzungselements und/oder des Ambosses bezüglich der Schweissfläche erreicht werden.

Der Amboss kann dabei derart beweglich gelagert sein, dass vor oder nach einem Schweissvorgang eine Einlege- bzw. Entnahmeöffnung erzeugt werden kann, an welcher der Verdichtungsraum in lateraler Richtung offen ist. Auf diese Weise kann das Schweissgut in den Verdichtungsraum eingelegt und wieder aus diesem entnommen werden.

Bei derartigen Vorrichtungen ist es oft schwierig, das Schweissgut auf komfortable Weise in einer gewünschten, für den Schweissvorgang günstigen Anordnung, z.B. ohne sich kreuzende Leiter oder Litzen, in den Verdichtungsraum einzulegen. Es bestehen dabei die gegensätzlich Anforderungen, den Verdichtungsraum einerseits zum komfortablen Einlegen des Schweissguts möglichst weit zu öffnen und andererseits das Schweissgut beim Einlegen mit möglichst wenig Spielraum in den Verdichtungsraum einzubringen.

EP 1 765 545 B1 sieht hierzu vor, in Durchtrittsrichtung vor und/oder hinter seitlichen Begrenzungselementen des Verdichtungsraums Leitelemente vorzusehen, welche bei geöffnetem Verdichtungsraum in der Flucht des lichten Durchtrittsbereichs des Verdichtungsraums anordenbar sind. Die Leitelemente bilden dabei Hilfselemente zum reproduzierbaren Ausrichten des Schweissguts im gewünschten Umfang. Beim Schliessen des Verdichtungsraums können die Leitelemente weg gebogen oder verstellt werden, sodass der Schweiss- bzw. Verdichtungsvorgang nicht behindert ist.

Während diese Lösung das günstige Einlegen des Schweissguts zwar erleichtert, wirken die Leitelemente nur auf Bereiche des Schweissguts ausserhalb des Verdichtungsraums. Da typischerweise nur die Schweissbereiche des Schweissguts von einer Isolation befreit werden, wirken die Leitelemente somit auf die Isolation des Leiters. Damit kann eine gewünschte Anordnung der eigentlichen Schweissbereiche im Verdichtungsraum jedoch nicht ausreichend sichergestellt werden. Insbesondere kann bei vergleichsweise dicken Ummantelungen ein beträchtlicher Abstand zwischen den Schweissbereichen zweier Leiter entstehen, was beim Verschweissen zu Abweichungen von einer optimalen Anordnung des Schweissguts führen kann.

Es ist daher die Aufgabe der Erfindung, die Nachteile des Standes der Technik zu überwinden. Insbesondere ist es eine Aufgabe der Erfindung, eine Vorrichtung sowie ein Verfahren zum Verschweissen bereitzustellen, welche bei gleichzeitig komfortabler Handhabung ein gezieltes und optimiertes Einlegen des Schweissguts in den Verdichtungsraum ermöglichen.

Diese Aufgaben werden durch die Merkmalskombinationen der unabhängigen Ansprüche gelöst.

Die Erfindung betrifft eine Vorrichtung zum Verschweissen von Schweissgut in einem Verdichtungsraum mittels Ultraschall, insbesondere zum Verschweissen von länglichem Schweissgut, vorzugsweise von elektrischen Leitern wie z.B. Litzen, wobei der Verdichtungsraum in einer Schweissposition von Abschnitten von aneinander angrenzenden Begrenzungsflächen umschlossen ist. Die Begrenzungsflächen umfassen eine Schweissfläche, welche an einer Ultraschallschwingungen übertragenden Sonotrode ausgebildet ist, eine Ambossfläche, welche an einem Amboss ausgebildet ist und in der Schweissposition als Gegenfläche gegenüber der Schweissfläche angeordnet ist. Weiter umfassen die Begrenzungsflächen eine Seitenfläche, welche an einem seitlichen Begrenzungselement ausgebildet ist und eine Schieberfläche, welche an einem Schieberelement ausgebildet ist und gegenüber der Seitenfläche angeordnet ist. Dabei ist der Verdichtungsraum zum Einbringen des Schweissguts in eine Einlegeposition bringbar, in welcher der Verdichtungsraum zum Einlegen des Schweissguts in einer Einlegerichtung an einer Einlegeöffnung zumindest teilweise offen ist. Die Erfindung zeichnet sich dadurch aus, dass wenigstens eine der Begrenzungsflächen derart beweglich ausgebildet ist, dass eine Ausrichtung relativ zur gegenüberliegenden Begrenzungsfläche, insbesondere beim Übergang von der Einlegeposition in die Schweissposition, veränderbar ist. Dabei ist bevorzugt die wenigstens eine Begrenzungsfläche die Schieberfläche und die gegenüberliegende Begrenzungsfläche die Seitenfläche.

Der Verdichtungsraum weist einen lichten Durchtritt auf, durch welchen das Schweissgut z.B. in den Verdichtungsraum hineinragt oder durch den Verdichtungsraum hindurchragen kann. Der lichte Durchtritt ist in der Regel zumindest in der Schweissposition in lateraler Richtung, d.h. im Wesentlichen quer zur Durchtrittsrichtung, von den Begrenzungsflächen weitgehend vollständig umschlossen. Entsprechend versteht sich die Einlegeöffnung der Einlegeposition als laterale Zugangsöffnung zum Verdichtungsraum, durch welche das Schweissgut in der typischerweise weitgehend quer zur Durchtrittsrichtung gerichteten Einlegerichtung in den Verdichtungsraum eingelegt werden kann. In der Regel wird die Einlegeöffnung durch Änderung der Anordnung wenigstens einer der Begrenzungsflächen, insbesondere der Ambossfläche, geschaffen.

Eine gegenüberliegende Anordnung von Begrenzungsflächen bezeichnet eine bezüglich des Verdichtungsraums, insbesondere bezüglich einer Durchtrittsrichtung des lichten Durchtritts gegenüberliegende Anordnung.

"Einlegeposition" und "Schweissposition" können dabei jeweils einzelne Positionen bezeichnen oder aber auch eine Schar von mehreren Positionen. Beispielsweise kann der lichte Durchtritt des Verdichtungsraums im Querschnitt während des Schweissvorgangs verringert werden, wenn dieser in der Schweissposition ist.

Mit der "Ausrichtung" einer Begrenzungsfläche ist vorliegend deren räumliche Orientierung, insbesondere in Bezug auf weitere Elemente der Vorrichtung, bezeichnet. Bei einer reinen Parallelverschiebung der Begrenzungsfläche ändert sich deren Ausrichtung im vorliegenden Sinne nicht. Selbstverständlich kann die erfindungsgemäss wenigstens eine Begrenzungsfläche zusätzlich zu der veränderbaren Ausrichtung auch parallel verschiebbar in der Vorrichtung angeordnet sein.

Die Begrenzungsflächen können jeweils beweglich in der Vorrichtung angeordnet sein, sodass z.B. gegenüberliegende Begrenzungsflächen wie Ambossfläche und Schweissfläche zum Verdichten des Schweissguts aufeinander zu bewegbar sind, wobei in der Regel die Ambossfläche zur Schweissfläche hin bewegbar ist. Ebenso können die Schieberfläche und die Seitenfläche aufeinander zu bewegbar sein, wobei typischerweise die Seitenfläche feststehend und die Schieberfläche beweglich ausgebildet ist.

In der Regel sind die Begrenzungsflächen weitgehend eben, wobei z.B. Profilierungen oder andere Strukturierungen der Flächen vorhanden sein können. Grundsätzlich ist es je nach Erfordernis allerdings auch denkbar, dass die Begrenzungsflächen z.B. gekrümmt sein können.

Die erfindungsgemässe Veränderlichkeit der Ausrichtung der wenigstens einen Begrenzungsfläche relativ zur gegenüberliegenden Begrenzungsfläche ermöglicht, dass der lichte Durchtritt des Verdichtungsraums in der Einlegeposition eine andere Querschnittsform und/oder Querschnittsfläche aufweisen kann, als in der Schweissposition. Auf diese Weise kann der Verdichtungsraum in der Einlegeposition zum gezielten Einlegen des Schweissguts optimiert werden, während in der Schweissposition eine für das Verschweissen optimale Konfiguration erstellt werden kann.

Wenigstens die Seitenfläche kann weitgehend senkrecht zur Schweissfläche angeordnet sein. Auf diese Weise weist der Verdichtungsraum eine rechtwinklige Innenkante auf, welche als kontrollierte Anlagefläche beim Einlegen des Schweissguts dient.

Die Ausrichtung der wenigstens einen Begrenzungsfläche ist bevorzugt derart veränderbar, dass in der Schweissposition des Verdichtungsraums die wenigstens eine Begrenzungsfläche und die gegenüberliegende Begrenzungsfläche weitgehend parallel ausgerichtet sind, während die wenigstens eine Begrenzungsfläche und die gegenüberliegende Begrenzungsfläche in der Einlegeposition des Verdichtungsraums, insbesondere von der Einlegeöffnung weg, in der Einlegerichtung, insbesondere weitgehend quer zur Durchtrittsrichtung, zusammenlaufen. Aufgrund der zusammenlaufenden Ausrichtung ergibt sich ein im weiteren Sinne "trichterförmiger" Querschnitt des lichten Durchtritts des Verdichtungsraums. Auf diese Weise ist das Schweissgut aufgrund des grösseren Abstands an der Einlegeöffnung einerseits komfortabel einlegbar. Aufgrund des sich verringernden Abstandes ist das Schweissgut andererseits gezielt im Verdichtungsraum anordenbar wie z.B. stapelbar.

Bevorzugt laufen die wenigstens eine Begrenzungsfläche und die gegenüberliegende Begrenzungsfläche in der Einlegeposition des Verdichtungsraums zu einer angrenzenden Begrenzungsfläche hin zusammen. Auf diese Weise wird erreicht, dass der in der Einlegeposition von der wenigstens einen Begrenzungsfläche und der gegenüberliegenden Begrenzungsfläche begrenzte Bereich des Verdichtungsraums durch die angrenzende Begrenzungsfläche abgeschlossen ist. Die angrenzende Begrenzungsfläche ist dabei bevorzugt der Einlegeöffnung gegenüberliegend angeordnet. Vorzugsweise ist die angrenzende Begrenzungsfläche die Schweissfläche, während die wenigstens eine Begrenzungsfläche von der Schieberfläche und die gegenüberliegende Begrenzungsfläche von der Seitenfläche bereitgestellt ist.

Die wenigstens eine Begrenzungsfläche kann an einem um eine Schwenkachse schwenkbaren Schwenkelement ausgebildet sein. Dabei ist die wenigstens eine Begrenzungsfläche an einem mit einem freien Ende ausschwenkbaren Schwenkarm des Schwenkelements ausgebildet. Bevorzugt ist das Schwenkelement schwenkbar an einem Grundkörper des Schieberelements gelagert, falls die wenigstens eine Begrenzungsfläche die Schieberfläche ist. Sofern die wenigstens eine Begrenzungsfläche von einer der anderen Begrenzungsflächen wie z.B. der Ambossfläche oder der Seitenfläche bereitgestellt ist, ist bevorzugt das Schwenkelement an einem entsprechenden Grundkörper des jeweiligen Elements ausgebildet, d.h. entsprechend an einem Grundkörper des Amboss oder des Begrenzungselements.

Mit Vorteil ist die Schwenkachse parallel zur gegenüberliegenden und zur angrenzenden Begrenzungsfläche ausgerichtet. Insbesondere ist die Schwenkachse somit gegebenenfalls parallel zur Schweissfläche und zur Seitenfläche ausgerichtet. Es versteht sich, dass die Schwenkachse eine geometrische Achse bezeichnen kann und ein zugehöriges Schwenklager ohne Achskörper ausgebildet sein kann.

Die Ausrichtung der Schwenkachse entspricht im Wesentlichen der Durchtrittsrichtung des lichten Durchtritts des Verdichtungsraums. Auf diese Weise ist sichergestellt, dass der Schwenkarm zumindest in der Einlegeposition in den lichten Durchtritt des Verdichtungsraums eingeschwenkt sein kann. Auf diese Weise ist sichergestellt, dass der Verdichtungsraum zum vereinfachten Einlegen des Schweissguts, insbesondere sich verengend, ausgebildet sein kann.

Mit Vorteil ist das Schwenkelement als Wippenelement ausgebildet, wobei einer der Wippenarme den Schwenkarm bildet. Auf diese Weise kann beispielsweise ein Aktuator und/oder ein Wegbegrenzer bzw. ein Anschlag für das Wippenelement am gegenüberliegenden Wippenarm angreifen.

Der gegenüberliegende Wippenarm kann dabei ausserhalb des Verdichtungsraums angeordnet sein, was die Zugänglichkeit erleichtert. Zudem schafft der gegenüberliegende Wippenarm ausserhalb des Verdichtungsraums an der Einlegeöffnung eine zusätzliche Rampe, welche das Einbringen des Schweissguts in die Einlegeöffnung erleichtert (mit anderen Worten im weiteren Sinne eine trichterförmige Zuführung zur Einlegeöffnung). Der gegenüberliegende Wippenarm kann hierzu gegenüber dem Schwenkarm von der Einlegeöffnung weggeneigt ausgebildet sein.

Das Schwenkelement kann derart mit einer Federkraft beaufschlagt sein, dass der Schwenkarm mit einem freien Ende zur gegenüberliegenden Begrenzungsfläche hin geschwenkt ist, wenn keine äusseren Kräfte auf das Schwenkelement wirken. Falls die wenigstens eine Begrenzungsfläche die Schieberfläche ist und das Schwenkelement am Grundkörper des Schieberelements angelenkt ist, ist das Schwenkelement bevorzugt gegenüber dem Grundkörper mit der Federkraft beaufschlagt. Beispielsweise kann hierzu ein Federelement am Grundkörper abgestützt auf den Schwenkarm mit der Schieberfläche wirken. Das Schwenkelement kann aber auch von einem Aktuator gesteuert verschwenkt werden. Insbesondere kann auf diese Weise, sofern gewünscht, eine Schwenkstellung und damit eine Ausrichtung der wenigstens einen Begrenzungsfläche auch während des Schweissvorgangs gesteuert werden.

Bevorzugt ist dabei ein Schwenkbereich des Schwenkarms von einer, insbesondere einstellbaren, Begrenzungsvorrichtung begrenzt. Auf diese Weise ist sichergestellt, dass die Schwenkstellungen des Schwenkarms, und damit eine Ausrichtung der daran ausgebildeten wenigstens einen Begrenzungsfläche, durch die Begrenzung des Schwenkbereichs vorgegeben sind. Bei einer einstellbaren Begrenzungsvorrichtung kann zudem die Begrenzung derart einstellbar sein, dass die Schwenkstellungen an spezifische Erfordernisse anpassbar oder vorgebbar sind. Beispielsweise können die möglichen Ausrichtungen der wenigstens einen Begrenzungsfläche in Abhängigkeit des Schweissguts oder anderer Anforderungen begrenzt werden.

Gegebenenfalls kann die Begrenzungsvorrichtung derart ausgebildet sein, dass die Begrenzung des Schwenkbereichs in einer Schwenkrichtung einer zur gegenüberliegenden Begrenzungsfläche parallele Ausrichtung der wenigstens einen Begrenzungsfläche entspricht. Ebenso kann die Begrenzung in die andere Schwenkrichtung eine geneigte Ausrichtung der wenigstens einen Begrenzungsfläche zur gegenüberliegenden Begrenzungsfläche ergeben, sodass diese Begrenzungsflächen in einer Einlegerichtung zusammenlaufen.

Das freie Ende des Schwenkelements ist mit Vorteil bei der Schweissfläche angeordnet. Auf diese Weise kann die wenigstens eine Begrenzungsfläche zumindest in der Einlegeposition derart bezüglich der gegenüberliegenden Begrenzungsfläche ausgerichtet werden, dass der Verdichtungsraum sich zur Schweissfläche hin verjüngt. Die Schweissfläche stellt in diesem Fall die oben erwähnte angrenzende Begrenzungsfläche bereit.

Die wenigstens eine Begrenzungsfläche kann beim Übergang in die Schweissposition, insbesondere automatisch, parallel zur gegenüberliegenden Begrenzungsfläche ausrichtbar sein. Auf diese Weise wird erreicht, dass bereits beim Übergang in die Schweissposition sichergestellt ist, dass die wenigstens eine Begrenzungsfläche in der Schweissposition parallel ausgerichtet ist.

Insbesondere bei einer Vorrichtung, bei welcher die wenigstens eine Begrenzungsfläche von der Schieberfläche bereitgestellt ist, kann der Amboss verschiebbar in der Vorrichtung angeordnet sein und zum Erstellen der Schweissposition aus einer eingefahrenen Position in Richtung von der Seitenfläche zur Schieberfläche hin in eine ausgefahrene Position verschiebbar sein. In der ausgefahrenen Position verschliesst die Ambossfläche die Einlegeöffnung und ist gegenüber der Schweissfläche angeordnet. Dabei kann der Amboss derart ausgebildet und bezüglich der Schieberfläche angeordnet sein, dass er beim Erstellen der Schweissposition zur parallelen Ausrichtung der Schieberfläche zur Seitenfläche auf die Schieberfläche wirkt. Der Amboss kann z.B. am Begrenzungselement verschiebbar gelagert sein. Beim Verschieben in die ausgefahrene Position kann der Amboss an die Schieberfläche stossen und auf dieses Weise eine Ausrichtung der Schieberfläche verändern. Sofern die Schieberfläche an einem Schwenkarm eines Schwenkelements ausgebildet ist, kann der Amboss beispielsweise auf den Schwenkarm wirken und diesen verschwenken.

Der Verdichtungsraum kann in eine Entnahmeposition bringbar sein, in welcher er an einer Entnahmeöffnung zur Entnahme bereits verschweissten Schweissguts offen ist, wobei ein mittlerer Abstand der wenigstens einen Begrenzungsfläche von der gegenüberliegenden Begrenzungsfläche in der Einlegeposition geringer ist, als in der Entnahmeposition. Auf diese Weise kann eine komfortable Entnahme des Schweissguts nach einem Schweissvorgang sichergestellt werden. Die Entnahmeöffnung kann dabei im selben Bereich wie die Einlegeöffnung der Einlegeposition angeordnet sein, wobei in der Regel die Entnahmeöffnung grösser, insbesondere in einer Richtung quer zur Durchtrittsrichtung, ausgebildet ist, als die Einlegeöffnung. Entnahmeöffnung und Einlegeöffnung können einander auch entsprechen, was im Übrigen auch auf die Entnahmeposition und Einlegeposition zutrifft.

Zum Erstellen der Entnahmeposition kann z.B. das Schieberelement vom Verdichtungsraum weg, insbesondere weiter weg, als in der Einlegeposition, beweglich sein. Selbstverständlich kann auch die Einlegeposition selbst eine Entnahmeposition sein, wobei die Einlegeöffnung als Entnahmeöffnung dient.

Die Vorrichtung kann eine Haltevorrichtung umfassen, mit welcher das Schweissgut ausserhalb des Verdichtungsraums, insbesondere während eines Schweissvorgangs, festlegbar ist und, insbesondere nach dem Schweissvorgang, wieder freigebbar ist. Die Haltevorrichtung kann z.B. als Klemmvorrichtung ausgebildet sein, welche das Schweissgut in der Schweissposition des Verdichtungsraums beispielsweise in Durchtrittsrichtung vor und/oder hinter dem Verdichtungsraum festklemmt. Die Haltevorrichtung kann dabei in eine Schutzabdeckung integriert sein, welche nach dem Einlegen des Schweissguts in den Verdichtungsraum zur Schutz vor eine Zugriff über den Verdichtungsraum geschoben wird. Im Falle einer Klemmvorrichtung kann diese z.B. elastische Klemmbacken umfassen, sodass die Klemmung für unterschiedlich ausgebildetes Schweissgut geeignet ist.

Die Erfindung betrifft auch ein Verfahren zum Verschweissen von Schweissgut mittels Ultraschall, insbesondere zum Verschweissen von länglichem Schweissgut, vorzugsweise von elektrischen Leitern, in einem Verdichtungsraum einer Vorrichtung zum Verschweissen, insbesondere einer Vorrichtung gemäss der Erfindung wie vorliegend beschrieben. Dabei ist der Verdichtungsraum in einer Schweissposition zumindest von Abschnitten von Begrenzungsflächen begrenzt, welche Begrenzungsflächen eine Schweissfläche einer Ultraschallschwingungen übertragenen Sonotrode, eine in der Schweissposition als Gegenfläche zur Schweissfläche wirkende Ambossfläche, eine Seitenfläche und eine Schieberfläche umfassen, wobei die Ambossfläche in der Schweissposition als Gegenfläche gegenüber der Schweissfläche und die Schieberfläche gegenüber der Seitenfläche angeordnet ist, umfassen. Das Verfahren umfasst die Schritte
- Erstellen einer Einlegeposition des Verdichtungsraums, in welcher der Verdichtungsraum zum Einlegen des Schweissguts in einer Einlegerichtung an einer Einlegeöffnung zumindest teilweise offen ist;
- Einlegen des Schweissguts in den Verdichtungsraum;
- Änderung einer Ausrichtung der wenigstens einen Begrenzungsfläche relativ zur gegenüberliegenden Begrenzungsfläche, insbesondere beim Übergang von der Einlegeposition in die Schweissposition, wobei bevorzugt die wenigstens eine Begrenzungsfläche die Schieberfläche und die gegenüberliegende Begrenzungsfläche die Seitenfläche ist.

Vorteile des erfindungsgemässen Verfahrens sowie bevorzugter Abwandlungen erschliessen sich unmittelbar aus der vorliegenden Beschreibung der erfindungsgemässen Vorrichtung.

Bevorzugt wird bei der Durchführung des Verfahrens eine Ausrichtung der wenigstens einen Begrenzungsfläche geändert, in welcher die wenigstens eine Begrenzungsfläche und die gegenüberliegende Begrenzungsfläche in der Einlegerichtung von der Einlegeöffnung weg zusammenlaufen.

Vorzugsweise wird die Ausrichtung der wenigstens einen Begrenzungsfläche in eine Ausrichtung parallel zur gegenüberliegenden Begrenzungsfläche geändert. Mit anderen Worten wird die Ausrichtung der wenigstens einen Begrenzungsfläche bevorzugt von einer zusammenlaufenden Ausrichtung in der Einlegeposition zu einer parallelen Ausrichtung in der Schweissposition geändert.

Mit Vorteil wird ein mittlerer Abstand der wenigstens einen Begrenzungsfläche von der gegenüberliegenden Begrenzungsfläche beim Übergang von der Einlegeposition in die Schweissposition verändert. Insbesondere falls die wenigstens eine Begrenzungsfläche von der Schieberfläche bereitgestellt ist, wird bevorzugt das Schieberelement zum Begrenzungselement hin oder von diesem weg verschoben, um den mittleren Abstand der wenigstens einen Begrenzungsfläche von der gegenüberliegenden Begrenzungsfläche zu verändern. Typischerweise wird der mittlere Abstand dabei verringert. Je nachdem kann es aber auch gewünscht sein, z.B. in Abhängigkeit des Schweissguts oder einer gewünschten Gestaltung der resultierenden Schweissstelle (Knoten), in denen der mittlere Abstand vergrössert wird. Mittlerer Abstand bezeichnet hierbei einen Mittelwert des Abstands zwischen der wenigstens einen Begrenzungsfläche und der gegenüberliegenden Begrenzungsfläche.

Bevorzugt wird das Schweissgut beim Einlegen zwischen der wenigstens einen Begrenzungsfläche und der gegenüberliegenden Begrenzungsfläche in der Einlegerichtung gestapelt. Dabei wird das Schweissgut, z.B. längliche elektrische Leiter wie Litzen, in Abhängigkeit eines Durchmessers bevorzugt derart gestapelt, dass Schweissgut mit grösserem Durchmesser in Bereichen mit geringerem Abstand zwischen den zwei Begrenzungsflächen angeordnet ist und Schweissgut mit geringerem Durchmesser in Bereichen mit grösserem Abstand. Selbstverständlich muss das Schweissgut nicht gestapelt werden und kann z.B. je nach Erfordernis bezüglich der Einlegerichtung auch nebeneinander angeordnet werden.

Bevorzugt werden die Ausrichtung und/oder ein mittlerer Abstand der wenigstens einen Begrenzungsfläche bezüglich der gegenüberliegenden Begrenzungsfläche in der Einlegeposition in Abhängigkeit einer Beschaffenheit des Schweissguts angepasst. Beispielsweise kann ein geringster Abstand der wenigsten einen Begrenzungsfläche von der gegenüberliegenden Begrenzungsfläche in der Einlegeposition an einen grössten Durchmesser des Schweissguts angepasst werden. Auf diese Weise ist sichergestellt, dass das Schweissgut mit dem grössten Durchmesser gerade zwischen den beiden Begrenzungsflächen angeordnet werden kann und das weitere Schweissgut problemlos darauf gestapelt werden kann. Selbstverständlich kann die Einlegeposition je nach gewünschter Anordnung des Schweissguts auch auf andere Weise an das Schweissgut angepasst werden.

Bevorzugt ist die Ambossfläche an einem Amboss ausgebildet, welcher verschiebbar in der Vorrichtung angeordnet ist und die Ausrichtung der wenigstens einen Begrenzungsfläche, insbesondere gegebenenfalls die Schieberfläche, wird vom Amboss bei dessen Verschiebung verändert. Insbesondere wird die wenigstens eine Begrenzungsfläche gegebenenfalls vom Amboss parallel zur gegenüberliegenden Begrenzungsfläche ausgerichtet.

Die Einlegeposition kann aus einer Entnahmeposition des Verdichtungsraums erstellt werden, in welcher Entnahmeposition der Verdichtungsraum an einer Entnahmeöffnung zur Entnahme bereits verschweissten Schweissguts offen ist. Dabei kann ein mittlerer Abstand der wenigstens einen Begrenzungsfläche von der gegenüberliegenden Begrenzungsfläche bei Übergang aus der Entnahmeposition in die Einlegeposition verringert werden und insbesondere eine Ausrichtung der wenigstens einen Begrenzungsfläche bezüglich der gegenüberliegenden Begrenzungsfläche konstant gehalten werden. Selbstverständlich ist es auch denkbar, die Ausrichtung der wenigstens einen Begrenzungsfläche beim Übergang von der Entnahmeposition in die Einlegeposition ebenfalls zu verändern.

Die Erfindung wird im Folgenden anhand von Abbildungen exemplarischer Ausführungsbeispiele näher erläutert.

Es zeigen schematisch:
- Fig. 1a: einen Verdichtungsraum einer erfindungsgemässen Vorrichtung in einer Entnahmeposition;
- Fig. 1b: den Verdichtungsraum in einer Einlegeposition;
- Fig. 1c: den Verdichtungsraum in einer Schweissposition;
- Fig. 1d: den Verdichtungsraum in einer weiteren Schweissposition;
- Fig. 2: eine Schrägansicht der erfindungsgemässen Vorrichtung mit dem Verdichtungsraum;
- Fig. 3: eine Ausschnittsansicht eines Arbeitsbereichs der Vorrichtung gemäss Fig. 2;
- Fig. 4: eine weitere Ausschnittsansicht eines Arbeitsbereichs der Vorrichtung gemäss Fig. 2;
- Fig. 5: eine weitere Ausschnittsansicht eines Arbeitsbereichs der Vorrichtung gemäss Fig. 2;
- Fig. 6: eine weitere Ausschnittsansicht eines Arbeitsbereichs der Vorrichtung gemäss Fig. 2.

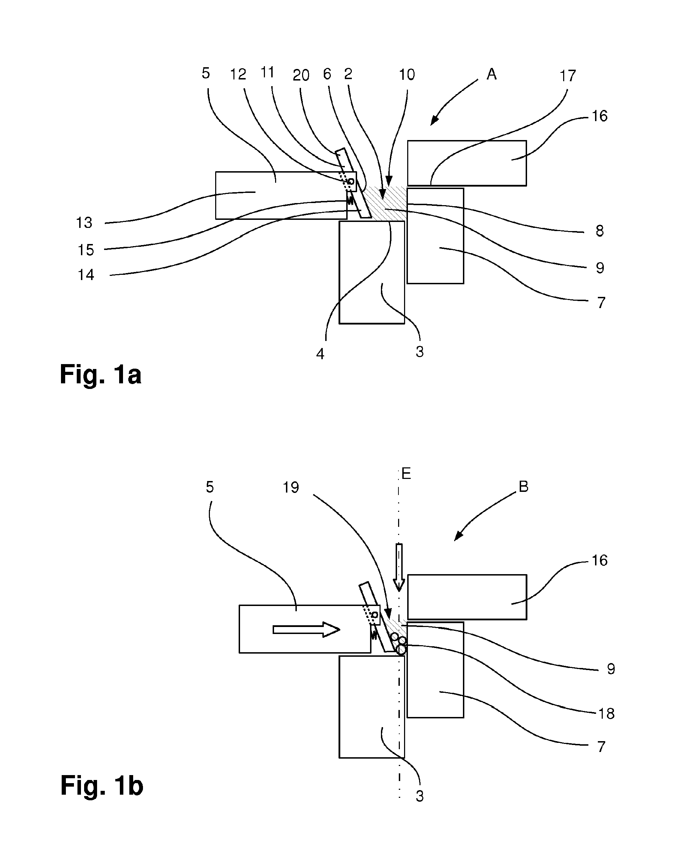

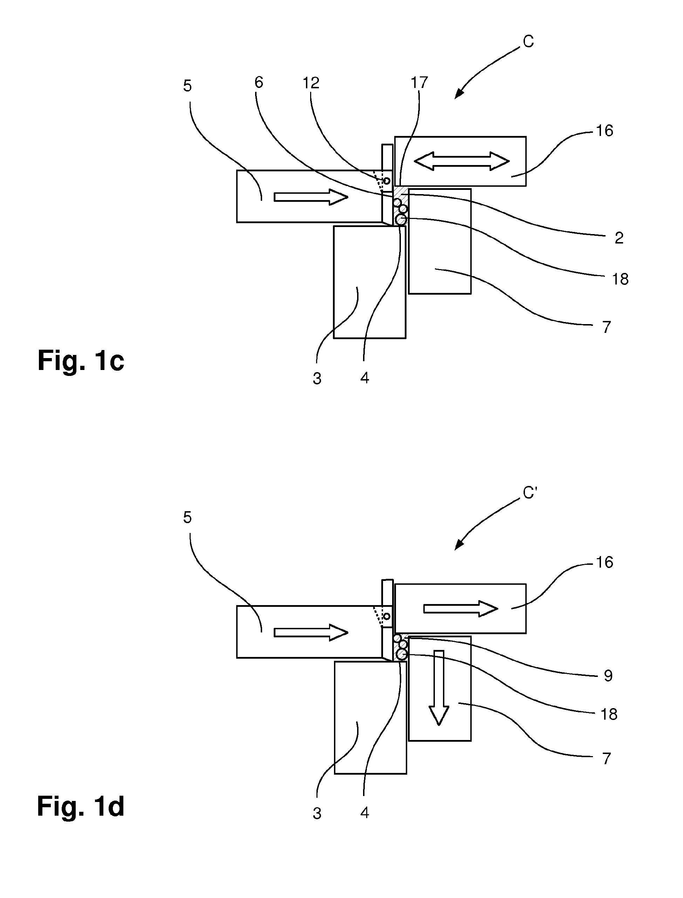

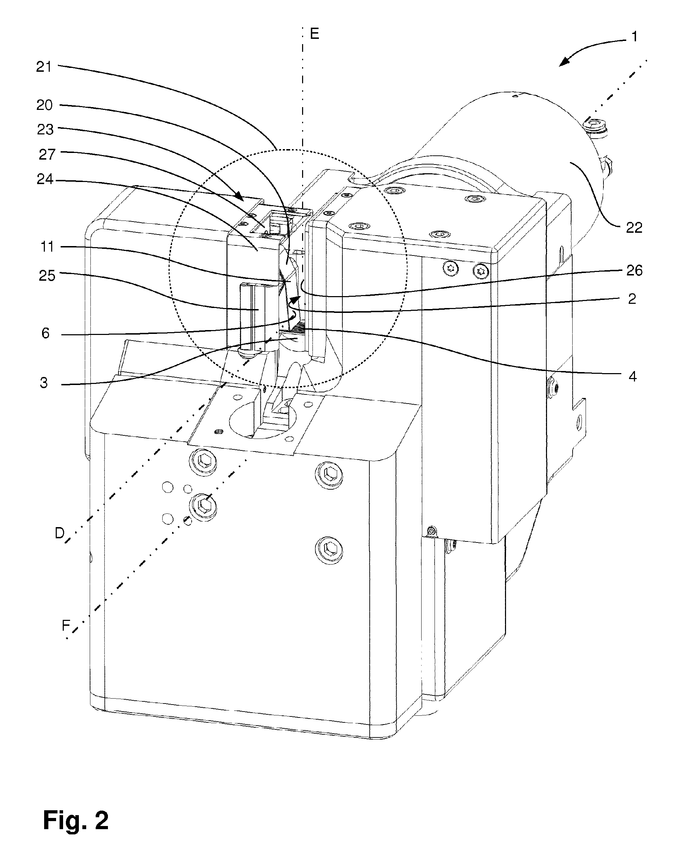

Figur 1a bis 1d zeigen schematisch verschiedene Positionen eines Verdichtungsraums 2 einer erfindungsgemässen Vorrichtung 1 (siehe Fig. 2 bis 6), welche beim Verschweissen eingenommen werden können. Figur 1a zeigt den Verdichtungsraum 2 in einer Entnahmeposition A. Figur 1b zeigt den Verdichtungsraum 2 in einer Einlegeposition B. Figur 1c und 1d stellen den Verdichtungsraum 2 jeweils in einer Schweissposition C und C' dar.

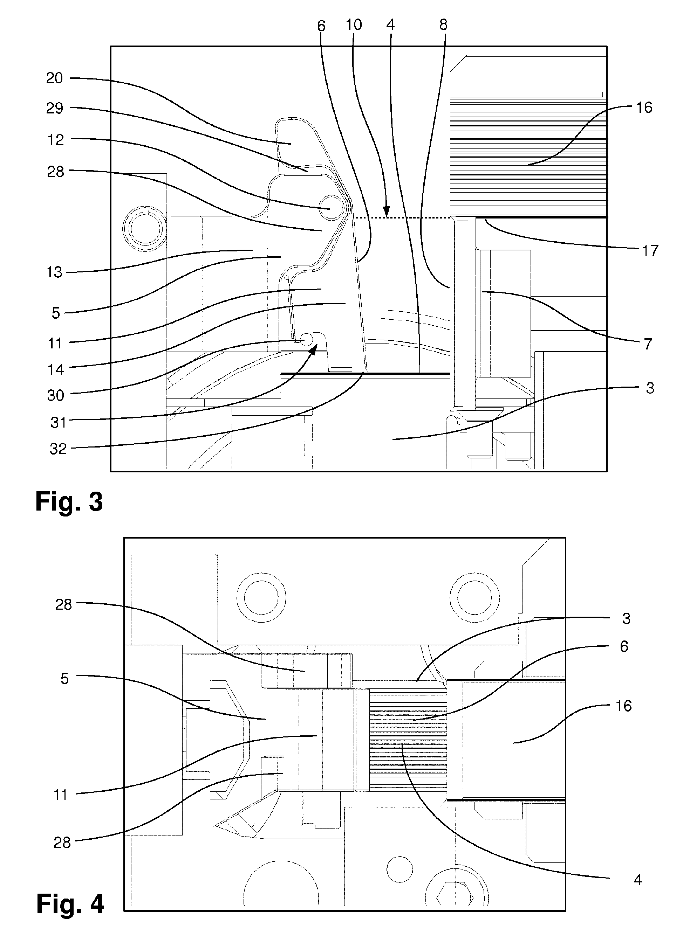

Der Verdichtungsraum 2 der Fig. 1a ist in lateraler von einer Schweissfläche 4 einer Sonotrode 3, einer Schieberfläche 6 eines Schieberelements 5 und einer Seitenfläche 8 eines Begrenzungselements 7 begrenzt. Mit lateraler Richtung werden hier Richtungen in einer Richtung quer zu einer Durchtrittsrichtung D (siehe z.B. Fig. 4) eines lichten Durchtritts 9 des Verdichtungsraums 2 für ein Schweissgut 18 (siehe z.B. Fig. 1b) bezeichnet. Gegenüberliegend zur Schweissfläche 4 ist eine Entnahmeöffnung 10 ausgebildet, durch welche Schweissgut 18 aus dem Verdichtungsraum 2 ausgebracht oder gegebenenfalls auch eingebracht werden kann. Die Seitenfläche 8 ist im Wesentlichen senkrecht zur Schweissfläche 4 ausgerichtet, wobei die Schweissfläche 4 an die Seitenfläche 8 angrenzt. Die Schieberfläche 6 ist bezüglich des lichten Durchtritts 9, d.h. bezüglich der Durchtrittsrichtung D gegenüber der Seitenfläche 8 angeordnet.

Die Schieberfläche 6 ist an einem wippenförmigen Schwenkelement 11 ausgebildet. Das Schwenkelement 11 ist um eine Schwenkachse 12 schwenkbar an einem Grundkörper 13 des Schieberelements 5 angelenkt. Die Schwenkachse 12 ist, von der Schweissfläche 4 möglichst weit beabstandet, an einer verdichtungsraumseitigen Stirnseite des Grundkörpers 13 angeordnet. Ein Wippenarm 14 des Schwenkelements 11, an welchem die Schieberfläche 6 ausgebildet ist, erstreckt sich mit einem freien Ende in einer Richtung zur Schweissfläche 4 hin. Die Schwenkachse 12 ist parallel zur Seitenfläche 8 sowie zur Schweissfläche 4 angeordnet. Die Schieberfläche 6 ist parallel zur Schwenkachse 12 angeordnet. Auf diese Weise kann eine Ausrichtung der Schieberfläche 6 in Bezug auf die gegenüberliegende Seitenfläche 8 durch Verschwenken des Schwenkelements 11 verändert werden.

Der Wippenarm 14 ist gegenüber dem Grundkörper 13 mit einer Federkraft beaufschlagt. Hierzu ist ein Federelement 15 zwischen dem Wippenarm 14 und dem Grundkörper 13 angeordnet. Auf diese Weise ist der Wippenarm 14 mit seinem freien Ende, und damit auch die Schieberfläche 6, zumindest teilweise zur gegenüberliegend angeordneten Seitenfläche 8 hin verschwenkt, falls keine äusseren Kräfte auf das Schwenkelement 11 wirken. Die Schieberfläche 6 ist somit geneigt bezüglich der Seitenfläche 8 ausgerichtet und der lichte Durchtritt 9 weist senkrecht zur Durchtrittsrichtung D einen weitgehend trapezförmigen Querschnitt auf (siehe Schraffur in Fig. 1a).

Bezüglich der Schwenkachse 12 dem Schwenkarm 14 gegenüberliegend weist das Schwenkelement 11 einen weiteren Wippenarm 20 auf, welcher ausserhalb des Verdichtungsraums 2 von der Entnahmeöffnung 10 nach aussen ragt. Der Wippenarm 20 wirkt dabei als Rampe, welche das Einbringen des Schweissguts 18 zur bzw. in die Entnahmeöffnung 10 oder entsprechend die Einlegeöffnung 19 (siehe Fig. 1b) erleichtert.

An die Seitenfläche 8 angrenzend und weitgehend senkrecht zu dieser ist eine Ambossfläche 17 an einem Amboss 16 ausgebildet. Der Amboss 16 ist im Wesentlichen senkrecht zu D und weitgehend parallel zur Schweissfläche 4 verschiebbar derart angeordnet, dass bei einer Verschiebung des Amboss 16 zum Schieberelement 5 hin die Ambossfläche 17 weitgehend parallel ausgerichtet gegenüber der Schweissfläche 4 angeordnet ist. Dabei ist die Entnahmeöffnung 7 zumindest teilweise von der Ambossfläche 17 verschliessbar.

Figur 1b zeigt den Verdichtungsraum 2 in der Einlegeposition B. In der Einlegeposition B ist das Schieberelement 5 senkrecht zu D in Richtung zum Begrenzungselement 7 hin verschoben. Damit ist die Schieberfläche 6 näher bei der Seitenfläche 8 angeordnet, als in der Entnahmeposition A. Die Entnahmeöffnung 10 hat sich damit verkleinert und wird vorliegend in der Einlegeposition A mit Einlegeöffnung 19 bezeichnet. Der lichte Durchtritt 9 weist damit in Richtung von der Schieberfläche 6 zur Seitenfläche 8 eine geringere mittlere Querschnittsdimension auf, als in der Entnahmeposition A. Insbesondere ergibt sich ein keilförmiger Querschnitt (Schraffur in Fig. 1b), welcher in einer Einlegerichtung E von der Einlegeöffnung 19 zur Schweissfläche 4 hin zusammenläuft. Die Einlegerichtung E ist dabei weitgehend senkrecht zur Schweissfläche 4 und zur Durchtrittsrichtung D angeordnet.

In den Verdichtungsraum 2 ist Schweissgut 18 eingelegt. Das Schweissgut 18 ist zwischen der Schieberfläche 6 und der Seitenfläche 8 gestapelt. Aufgrund des keilförmig (oder in weiterem Sinne "trichterförmig") zusammenlaufenden Querschnitts des lichten Durchtritts 9 des Verdichtungsraums 2 und des gewählten mittleren Abstandes der Schieberfläche 6 von der Seitenfläche 8 der Einlegeposition B ergibt sich die Stapelung des Schweissguts 18 beim Einlegen in der Einlegerichtung E von selbst. Beim Einlegen wird das Schweissgut 18 mit grösserem Querschnitt bzw. Durchmesser typischerweise zuerst eingelegt.

Der mittlere Abstand der Schieberfläche 6 von der Seitenfläche 8 sowie gegebenenfalls die Ausrichtung der Schieberfläche 6 können an das spezifische Schweissgut 18 angepasst werden. Vorliegend ist die Ausrichtung der Schieberfläche 6 in der Einlegeposition B gleich gewählt, wie in der Entnahmeposition A.

Figur 1c zeigt den Verdichtungsraum 2 in einer Schweissposition C. Zum Erstellen der Schweissposition C ist der Amboss 16 in Richtung zum Schieberelement 5 hin derart verschoben, dass die Ambossfläche 17 gegenüber der Schweissfläche 4 und weitgehend parallel zu dieser angeordnet ist. Dabei ist die Einlegeöffnung 19 von der Ambossfläche 17 verschlossen, womit der Verdichtungsraum 2 in lateraler Richtung bezüglich D im Wesentlichen vollständig umschlossen ist. Gleichzeitig kann mit oder nach dem Verschieben des Amboss 16 auch das Schieberelement 5 zum Begrenzungselement 7 hin verschoben werden (in Fig. 1c mit einem Pfeil angedeutet). Ebenso gibt es Fälle, bei denen das Schieberelement 5 dabei vom Begrenzungselement 7 weg verschoben wird z.B. im Fall einer Vorverdichtung durch gleichzeitiges Absenken des Amboss 16 zur Schweissfläche 4 hin (nicht dargestellt).

Beim Erstellen der Schweissposition C wirkt eine in der Verschieberichtung vorne liegende Stirnseite des Amboss 16 auf die Schieberfläche 6 und damit auf den Schwenkarm 14 des Schwenkelements 11. Der Amboss 16 ist dabei derart in Bezug auf das Schwenkelement 11 angeordnet, das über den Schwenkarm 14 ein Drehmoment auf das Schwenkelement bezüglich der Schwenkachse 12 wirkt, welches das Schwenkelement 11 gegen die Federkraft des Federelements 15 verstellt. Mit anderen Worten wird der Schwenkarm 14 zum Grundkörper 13 hin verschwenkt. Insbesondere wird das Schwenkelement 11 in eine Lage verschwenkt, in welcher die Schieberfläche 6 weitgehend parallel zur Seitenfläche 8 ausgerichtet ist.

Dabei kann der Amboss 16 an die Schieberfläche 6 und/oder die Schieberfläche 6 an den Amboss 16 heran verschoben werden. Bevorzugt werden Amboss 16 und/oder Schieberelement 5 derart relativ zueinander verschoben, dass eine mittlere Dimension des lichten Durchtritts 9 (Schraffur) zwischen Schieberfläche 6 und Seitenfläche 8 beim Verschwenken des Schwenkelements 11 gleich bleibt oder verringert wird, sodass die Stapelung des Schweissguts 18 im Wesentlichen erhalten bleibt.

Figur 1d zeigt den Verdichtungsraum 2 in einer weiteren Schweissposition C'. Die Schweissposition C' wird in der Regel, analog bekannten gattungsgemässen Schweissvorrichtungen, im weiteren Verlauf eines Schweissvorgangs eingenommen. Die Querschnittsfläche des lichten Durchtritts 9 (Schraffur) wird durch relative Verschiebung zueinander und der relativ zur Schweissfläche 4 bzw. der Sonotrode 3 einer oder mehrerer der den Verdichtungsraum 2 begrenzenden Begrenzungsflächen verringert. Vorliegend erfolgt dies je nach Erfordernis durch Verschiebung des Schieberelements 5 und/oder des Amboss 16 und/oder des Begrenzungselements 7 (durch entsprechende Pfeile angedeutet).

Mit anderen Worten wird der Verdichtungsraum 2 zum Verdichten des Schweissguts 18 während des Schweissvorgangs verkleinert, wobei das Schweissgut 18 in der Regel zur verbesserten Einbringung der Ultraschallschwingungen in das Schweissgut 18 zumindest gegen die Schweissfläche 4 gepresst wird. Dabei ist die Sonotrode 3 von einem Konverter 22 (siehe z.B. Fig. 2) mit Ultraschallschwingungen beaufschlagt, welche über die Schweissfläche 4 in das Schweissgut 18 eingeleitet werden.

Figur 2 zeigt eine Schrägansicht der erfindungsgemässen Vorrichtung 1 mit dem Verdichtungsraum 2. Die Vorrichtung 1 weist einen Arbeitsbereich 21 (gestrichelt angedeutet) auf, in welchem der Verdichtungsraum 2 angeordnet ist. Die Durchtrittsrichtung D des lichten Durchtritts 9 des Verdichtungsraums 2 ist dabei weitgehend parallel zu einer Längsachse F der Vorrichtung 1 ausgerichtet. Der Arbeitsbereich 21 ist in einem Bereich an einem Längsende der Vorrichtung 1 angeordnet.

In einem dem Arbeitsbereich 21 gegenüberliegenden Endbereich längs F ist ein Konverter 22 angeordnet. Der Konverter 22 ist vorliegend zur Erzeugung longitudinaler Ultraschallschwingungen in Richtung von F ausgebildet und angeordnet. Die in longitudinaler Richtung angeordnete Sonotrode 3 schwingt somit ebenfalls in Richtung von F. Die Schweissfläche 4 weist entsprechend eine Profilierung mit Querrillen senkrecht zu D auf, um die Schwingungen besser in das Schweissgut 18 einbringen zu können.

Im Arbeitsbereich 21 ist eine Schutzvorrichtung 23 zum Schutz des Verdichtungsraums 2 während des Schweissvorgangs angeordnet. Die Schutzvorrichtung 23 umfasst eine Schutzhaube 24, welche im Bedarfsfall quer zur Durchtrittsrichtung D über den Verdichtungsraum 2 in eine geschlossene Stellung verschiebbar ist. Die Schutzhaube 24 ist als U-förmiger Sturz ausgebildet. In der geschlossenen Stellung stösst die Schutzhaube 24 im Wesentlichen an eine gegenüberliegende Fläche 26 im Arbeitsbereich 21 der Vorrichtung 1 an und überspannt dabei den Verdichtungsraum 2. Die Schutzhaube 24 weist ein Sichtfenster 27 auf, welches in der geschlossenen Stellung oberhalb des Verdichtungsraums 2 angeordnet ist und eine visuelle Überprüfung des Schweissvorgangs erlaubt.

An endseitigen Kanten der Schutzhaube 24 sind in Richtung von D vor und hinter dem Verdichtungsraum 2 jeweils elastische Klemmlippen 25 angeordnet. Mittels der Klemmlippen 25 kann das im Verdichtungsraum 2 angeordnete Schweissgut 18 (in Fig. 2 nicht dargestellt) bei geschlossener Schutzhaube 24 an der Fläche 26 festgeklemmt werden. Auf diese Weise ist eine Lage des Schweissguts 18 ausserhalb des Verdichtungsraums 2 weitgehend festgelegt.

Am Verdichtungsraum 2 ist das Schwenkelement 11 mit Schwenkarm 14 und Wippenarm 20 erkennbar. Schwenkarm 14 und Wippenarm 20 sind vorliegend zueinander geneigt ausgerichtet, wobei der Wippenarm 20 gegenüber dem Schwenkarm 14 nach aussen, vom Verdichtungsraum 2 weg, geneigt ist. Auf diese Weise wird mit dem Wippenarm 20 in Einlegerichtung E eine breite Trichteröffnung geschaffen, welche das Einbringen des Schweissguts 18 durch die Einlegeöffnung 19 bzw. Entnahmeöffnung 10 erleichtert.

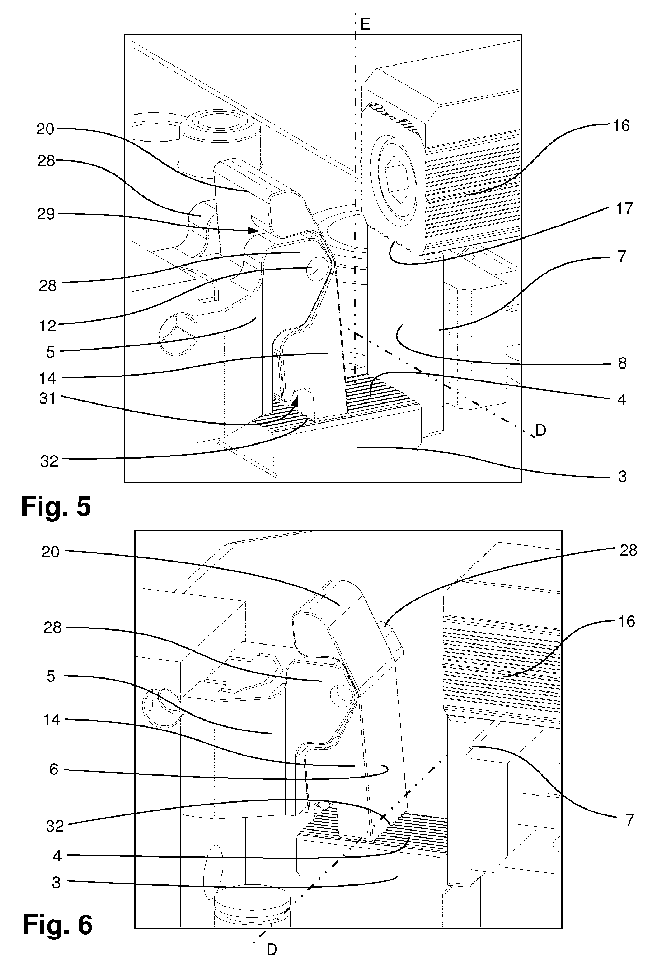

Figur 3 zeigt eine Ausschnittsansicht des Arbeitsbereichs 21 der Vorrichtung 1 gemäss Fig. 2 mit Blickrichtung längs D. Figur 4 zeigt eine Ausschnittsansicht gemäss Fig. 3 mit Blickrichtung in Einlegerichtung E, senkrecht zur Schweissfläche 4. Figuren 5 und 6 zeigen ebenfalls Ausschnittsansichten gemäss Fig. 3, wobei der Verdichtungsraum 2 in zwei Schrägansichten dargestellt ist. Der Verdichtungsraum 2 befindet sich in der Entnahmestellung A und ist an der Entnahmeöffnung 10 offen (in Fig. 3 gestrichelt angedeutet). Zur besseren Übersichtlichkeit sind Gehäuseteile, Abdeckungen und weitere Elemente wie z.B. die Sicherheitsvorrichtung 23 nicht dargestellt. Im Folgenden sind Fig. 3 bis 6 gemeinsam beschrieben.

Das Schwenkelement 11 ist dabei mit der Schwenkachse 12 an in Richtung von D hintereinander angeordneten Lagerwangen 28 des Grundkörpers 13 gelagert. Das Schwenkelement 11 weist an einer Vorderseite, d.h. an einer in Richtung von F vom Konverter 22 abgewandten Seite, eine seitliche Lageraussparung 29 auf, in welche eine der Lagerwangen 28 angeordnet ist. Die andere Lagerwange 28 umgreift das Schwenkelement 11 von aussen (siehe hierzu Ansicht der Fig. 4).

Am Grundkörper 13 ist weiter fest ein Anschlagsbolzen 30 angeordnet, welcher lose in eine Aussparung 31 am Schwenkarm 14 des Schwenkelements 11 eingreift. Anschlagsbolzen 30 und Aussparung 31 bilden eine Begrenzungsvorrichtung, welche einen Schwenkbereich des Schwenkelements 12 um die Schwenkachse 12 begrenzt.

Gegenüber der am Schwenkarm 14 ausgebildeten Schieberfläche 6 ist die Seitenfläche 8 an dem Begrenzungselement 7 ausgebildet. Sowohl an die Schieberfläche 6 als auch an die Seitenfläche 8 angrenzend ist die Schweissfläche 4 der Sonotrode 3 angeordnet. Die Schweissfläche 4 weist eine Profilierung mit Querrillen senkrecht zu D auf, um die Schwingungen besser in das Schweissgut 18 einbringen zu können. Eine freie Endkante 32 des Schwenkarms 14 weist entsprechende Zacken auf, mit welchen der Schwenkarm 14 beim Verschwenken in die Querrillen der Schweissfläche 4 mit ausreichend Spielraum eingreifen, sodass die Sonotrode 3 frei schwingen kann. Zacken und Querrillen stellen zum einen sicher, dass der Schwenkarm 14 mit den Zacken zumindest bis zur Rillentiefe in die Schweissfläche 4 eingreifen kann. Damit kann ein Abstand der freien Kante 32 von der Schweissfläche 4 in ausgeschwenktem Zustand vergleichsweise gering gehalten werden. Zum anderen ist wirkungsvoll verhindert, dass sich das Schweissgut beim Verschweissen zwischen Schwenkarm 14 und Schweissfläche 4 verklemmen kann.

Der Amboss 16 ist derart an das Begrenzungselement 7 angrenzend angeordnet, dass die Stirnseite des Amboss 16 mit der Schieberfläche 6 zusammenwirken kann, wenn der Amboss 16 und/oder das Schieberelement 5 zueinander hin verschoben werden. Seitenflächen des Amboss 16, insbesondere auch die Ambossfläche 17, weisen in dessen Längsrichtung, d.h. dessen Verschieberichtung, Längsrillen auf. In die Längsrillen greifen Zacken einer angrenzenden Kante der Seitenfläche 8 ein, sodass ein geradliniger Spalt am Übergang der beiden Flächen vermieden ist und das Schweissgut 18 nicht verklemmen kann.

## Patentansprüche

1. Vorrichtung (1) zum Verschweissen von Schweissgut (18) in einem Verdichtungsraum (2) mittels Ultraschall, insbesondere zum Verschweissen von länglichem Schweissgut, vorzugsweise von elektrischen Leitern, wobei der Verdichtungsraum (2) in einer Schweissposition (C, C') von Abschnitten von aneinander angrenzenden Begrenzungsflächen (4, 6, 8, 17) umschlossen ist, welche Begrenzungsflächen
a.) eine Schweissfläche (4), welche an einer Ultraschallschwingungen übertragenden Sonotrode (3) ausgebildet ist,
b.) eine Ambossfläche (17), welche an einem Amboss (16) ausgebildet ist und in der Schweissposition (C, C') als Gegenfläche gegenüber der Schweissfläche (4) angeordnet ist,
c.) eine Seitenfläche (8), welche an einem seitlichen Begrenzungselement (7) ausgebildet ist,
d.) eine Schieberfläche (6), welche an einem Schieberelement (5) ausgebildet ist und gegenüber der Seitenfläche (8) angeordnet ist,
umfassen, wobei der Verdichtungsraum (2) zum Einbringen des Schweissguts (18) in eine Einlegeposition (B) bringbar ist, in welcher der Verdichtungsraum (2) zum Einlegen des Schweissguts (18) in einer Einlegerichtung (E) an einer Einlegeöffnung (19) zumindest teilweise offen ist,
**dadurch gekennzeichnet, dass**
wenigstens eine der Begrenzungsflächen (6) derart beweglich ausgebildet ist, dass eine Ausrichtung relativ zur gegenüberliegenden Begrenzungsfläche (8), insbesondere beim Übergang von der Einlegeposition (B) in die Schweissposition (C, C'), veränderbar ist, wobei bevorzugt die wenigstens eine Begrenzungsfläche (6) die Schieberfläche (6) und die gegenüberliegende Begrenzungsfläche (8) die Seitenfläche (8) ist.

2. Vorrichtung (1) gemäss Anspruch 1, **dadurch gekennzeichnet, dass** wenigstens die Seitenfläche (8) weitgehend senkrecht zur Schweissfläche (4) angeordnet ist.

3. Vorrichtung (1) gemäss Anspruch 1 oder 2, **dadurch gekennzeichnet, dass** die Ausrichtung der wenigstens einen Begrenzungsfläche (6) derart veränderbar ist, dass in der Schweissposition (C, C') des Verdichtungsraums (2) die wenigstens eine Begrenzungsfläche (6) und die gegenüberliegende Begrenzungsfläche (8) weitgehend parallel ausgerichtet sind, während die wenigstens eine Begrenzungsfläche (6) und die gegenüberliegende Begrenzungsfläche (8) in der Einlegeposition (B) des Verdichtungsraums (2), insbesondere von der Einlegeöffnung (19) weg, in der Einlegerichtung (E) zusammenlaufen.

4. Vorrichtung (1) gemäss Anspruch 3, **dadurch gekennzeichnet, dass** die wenigstens eine Begrenzungsfläche (6) und die gegenüberliegende Begrenzungsfläche (8) in der Einlegeposition (B) des Verdichtungsraums (2) zu einer angrenzenden Begrenzungsfläche (4), insbesondere zur Schweissfläche (4), hin zusammenlaufen.

5. Vorrichtung (1) gemäss einem der Ansprüche 1 bis 4, **dadurch gekennzeichnet, dass** die wenigstens eine Begrenzungsfläche (6) an einem um eine Schwenkachse (12) schwenkbaren Schwenkelement (11) ausgebildet ist, wobei die wenigstens eine Begrenzungsfläche (6) an einem mit einem freien Ende (32) ausschwenkbaren Schwenkarm (14) des Schwenkelements (11) ausgebildet ist, wobei das Schwenkelement (11) schwenkbar an einem Grundkörper (13) des Schieberelements (5) gelagert ist, falls die wenigstens eine Begrenzungsfläche (6) die Schieberfläche (6) ist.

6. Vorrichtung (1) gemäss Anspruch 5, **dadurch gekennzeichnet, dass** die Schwenkachse (12) parallel zur gegenüberliegenden und zur angrenzenden Begrenzungsfläche (6, 8) ausgerichtet ist.

7. Vorrichtung (1) gemäss einem der Ansprüche 5 oder 6, **dadurch gekennzeichnet, dass** das Schwenkelement (11) als Wippenelement ausgebildet ist, wobei einer der Wippenarme des Schwenkelements (11) den Schwenkarm (14) bildet.

8. Vorrichtung (1) gemäss einem der Ansprüche 5 bis 7, **dadurch gekennzeichnet, dass** das Schwenkelement (11), insbesondere gegebenenfalls gegenüber dem Grundkörper (13) des Schieberelements (5), derart mit einer Federkraft beaufschlagt ist, dass der Schwenkarm (14) mit einem freien Ende (32) zur gegenüberliegenden Begrenzungsfläche (8) hin geschwenkt ist, wenn keine äusseren Kräfte auf das Schwenkelement (11) wirken, wobei vorzugsweise ein Schwenkbereich des Schwenkarms (14) von einer, insbesondere einstellbaren, Begrenzungsvorrichtung (30, 31) begrenzt ist.

9. Vorrichtung (1) gemäss einem der Ansprüche 5 bis 8, **dadurch gekennzeichnet, dass** das freie Ende (32) des Schwenkelements (11) bei der Schweissfläche (4) angeordnet ist.

10. Vorrichtung (1) gemäss einem der Ansprüche 5 bis 9, **dadurch gekennzeichnet, dass** die wenigstens eine Begrenzungsfläche (6) beim Übergang in die Schweissposition, insbesondere automatisch, parallel zur gegenüberliegenden Begrenzungsfläche (8) ausrichtbar ist.

11. Vorrichtung (1) gemäss einem der Ansprüche 1 bis 10, bei welcher die wenigstens eine Begrenzungsfläche (6) die Schieberfläche (6) ist, **dadurch gekennzeichnet, dass** der Amboss (16) verschiebbar in der Vorrichtung (1) angeordnet ist und zum Erstellen der Schweissposition (C, C') aus einer eingefahrenen Position in Richtung von der Seitenfläche (8) zur Schieberfläche (6) hin in eine ausgefahrene Position verschiebbar ist, in welcher die Ambossfläche (17) die Einlegeöffnung (19) verschliesst und gegenüber der Schweissfläche (4) angeordnet ist, wobei der Amboss (16) derart ausgebildet und bezüglich der Schieberfläche (6) angeordnet ist, dass er beim Erstellen der Schweissposition (C, C') zur parallelen Ausrichtung der Schieberfläche (6) zur Seitenfläche (8) auf die Schieberfläche (6) wirkt.

12. Vorrichtung (1) gemäss einem der Ansprüche 1 bis 11, **dadurch gekennzeichnet, dass** der Verdichtungsraum (2) in eine Entnahmeposition (A) bringbar ist, in welcher der Verdichtungsraum (2) an einer Entnahmeöffnung (10) zur Entnahme bereits verschweissten Schweissguts offen ist, wobei ein mittlerer Abstand der wenigstens einen Begrenzungsfläche (6) von der gegenüberliegenden Begrenzungsfläche (8) in der Einlegeposition (b) geringer ist, als in der Entnahmeposition (A).

13. Vorrichtung (1) gemäss einem der Ansprüche 1 bis 12, **dadurch gekennzeichnet, dass** eine Haltevorrichtung (25, 26) vorhanden ist, mit welcher das Schweissgut (18) ausserhalb des Verdichtungsraums (2), insbesondere während eines Schweissvorgangs, festlegbar ist und, insbesondere nach einem Schweissvorgang, wieder freigebbar ist.

14. Verfahren zum Verschweissen von Schweissgut (18) mittels Ultraschall, insbesondere zum Verschweissen von länglichem Schweissgut (18), vorzugsweise von elektrischen Leitern, in einem Verdichtungsraum (2) einer Vorrichtung (1) zum Verschweissen, insbesondere einer Vorrichtung (1) gemäss einem der Ansprüche 1 bis 13, wobei der Verdichtungsraum (2) in einer Schweissposition (C, C') zumindest von Abschnitten von Begrenzungsflächen begrenzt ist, welche Begrenzungsflächen eine Schweissfläche (4) einer Ultraschallschwingungen übertragenen Sonotrode (3), eine in der Schweissposition als Gegenfläche zur Schweissfläche (4) wirkende Ambossfläche (17), eine Seitenfläche (8) und eine Schieberfläche (6) umfassen, wobei die Ambossfläche (17) in der Schweissposition (C, C') als Gegenfläche gegenüber der Schweissfläche (4) und die Schieberfläche (6) gegenüber der Seitenfläche (8) angeordnet ist, umfassen, wobei das Verfahren die Schritte umfasst:
a.) Erstellen einer Einlegeposition (B) des Verdichtungsraums (2), in welcher der Verdichtungsraum (2) zum Einlegen des Schweissguts (18) in einer Einlegerichtung (E) an einer Einlegeöffnung (19) zumindest teilweise offen ist,
b.) Einlegen des Schweissguts (18) in den Verdichtungsraum (2),
c.) Änderung einer Ausrichtung der wenigstens einen Begrenzungsfläche (6) relativ zur gegenüberliegenden Begrenzungsfläche (8), insbesondere beim Übergang von der Einlegeposition (B) in die Schweissposition (C, C'), wobei bevorzugt die wenigstens eine Begrenzungsfläche (6) die Schieberfläche (6) und die gegenüberliegende Begrenzungsfläche (8) die Seitenfläche (8) ist.

15. Verfahren gemäss Anspruch 14, **dadurch gekennzeichnet, dass** eine Ausrichtung der wenigstens einen Begrenzungsfläche (6) geändert wird, in welcher die wenigstens eine Begrenzungsfläche (6) und die gegenüberliegende Begrenzungsfläche (8) in der Einlegerichtung (E) von der Einlegeöffnung (19) weg zusammenlaufen.

16. Verfahren gemäss einem der Ansprüche 14 oder 15, **dadurch gekennzeichnet, dass** die Ausrichtung der wenigstens einen Begrenzungsfläche (6) in eine Ausrichtung parallel zur gegenüberliegenden Begrenzungsfläche (8) geändert wird.

17. Verfahren gemäss einem der Ansprüche 14 bis 16, **dadurch gekennzeichnet, dass** ein mittlerer Abstand der wenigstens einen Begrenzungsfläche (6) von der gegenüberliegenden Begrenzungsfläche (8) beim Übergang von der Einlegeposition (B) in die Schweissposition (C, C') verändert wird.

18. Verfahren gemäss einem der Ansprüche 14 bis 17, **dadurch gekennzeichnet, dass** das Schweissgut (18) beim Einlegen zwischen der wenigstens einen Begrenzungsfläche (6) und der gegenüberliegenden Begrenzungsfläche (8) in der Einlegerichtung (E) gestapelt wird.

19. Verfahren gemäss einem der Ansprüche 14 bis 18, **dadurch gekennzeichnet, dass** die Ausrichtung und/oder ein mittlerer Abstand der wenigstens einen Begrenzungsfläche (6) bezüglich der gegenüberliegenden Begrenzungsfläche (8) in der Einlegeposition (B) in Abhängigkeit einer Beschaffenheit des Schweissguts (18) angepasst wird.

20. Verfahren gemäss einem der Ansprüche 14 bis 19, **dadurch gekennzeichnet, dass** die Ambossfläche (17) an einem Amboss (16) ausgebildet ist, welcher verschiebbar in der Vorrichtung (1) angeordnet ist und die Ausrichtung der wenigstens einen Begrenzungsfläche (6), insbesondere gegebenenfalls die Schieberfläche (6), vom Amboss (16) bei dessen Verschiebung verändert wird, insbesondere gegebenenfalls vom Amboss (16) parallel zur gegenüberliegenden Begrenzungsfläche (8) ausgerichtet wird.

21. Verfahren gemäss einem der Ansprüche 14 bis 20, **dadurch gekennzeichnet, dass** die Einlegeposition (B) aus einer Entnahmeposition (A) des Verdichtungsraums (2) erstellt wird, in welcher Entnahmeposition (A) der Verdichtungsraum (2) an einer Entnahmeöffnung (10) zur Entnahme bereits verschweissten Schweissguts offen ist, wobei ein mittlerer Abstand der wenigstens einen Begrenzungsfläche (6) von der gegenüberliegenden Begrenzungsfläche (8) beim Übergang aus der Entnahmeposition (A) in die Einlegeposition (B) verringert wird und insbesondere eine Ausrichtung der wenigstens einen Begrenzungsfläche (6) bezüglich der gegenüberliegenden Begrenzungsfläche (8) konstant gehalten wird.
